# EUROPÄISCHE PATENTSCHRIFT

(11) **EP 0 326 220 B1**
(45) Veröffentlichungstag und Bekanntmachung des Hinweises auf die Patenterteilung: **29.09.1993**
(21) Anmeldenummer: 89200136.3
(22) Anmeldetag: 24.01.1989
(51) Int. Cl.: H02M 3/155

(54) **Schaltungsanordnung zur Speisung einer Last**
Circuit arrangement for supplying a load
Disposition de circuit pour alimenter une charge

(30) Priorität: 29.01.1988 DE 3802594; 03.09.1988 DE 3830016
(43) Veröffentlichungstag der Anmeldung: 02.08.1989
(73) Patentinhaber: Philips Patentverwaltung GmbH, 22335 Hamburg (DE); Philips Electronics N.V., 5621 BA Eindhoven (NL)
(72) Erfinder: Albach, Manfred, D-5100 Aachen (DE); Raets, Hubert, NL-6391 AJ Nieuwenhagen (NL)
(74) Vertreter: Peters, Carl Heinrich, Dipl.-Ing.

(56) Entgegenhaltungen:
- EP-A- 0 169 461
- FR-A- 2 584 545
- JP-A-60 183 972

## Beschreibung

Die Erfindung bezieht sich auf eine Schaltungsanordnung zur Speisung einer Last nach dem Oberbegriff des Hauptanspruchs.

Aus der englischen Kurzzusammenfassung der japanischen Anmeldung 60-183972 ist eine Schaltungsanordnung für einen Gleichspannungsumsetzer mit niedriger Eingangsspannung bekannt. Dabei werden die Schaltanordnung und ein Oszillator einerseits über eine Diode aus einer Energiequelle niedriger Spannung und andererseits aus der hohen Spannung einer Tertiärwicklung eines Transformators gespeist, die durch einen gesonderten Glättungskondensator geglättet worden ist. Eine Last wird aus der Spannung gespeist, die über eine Sekundärwicklung, eine Diode und einen Glättungskondensator erzeugt wird.

Aus der französischen Patentanmeldung FR-2 584 545 ist ein Gleichspannungsumsetzer mit einem Hilfsschaltkreis für das Anlaufen der Schaltungsanordnung bekannt. Diese Schaltungsanordnung umfaßt einen Zerhackerschalter, der von einer Energiequelle gespeist wird und einen Strom durch eine Induktivität an einen Ausgangsanschluß leitet. Vom Verbindungspunkt des Zerhackerschalters, der als pnp-Transistor ausgeführt ist, mit der Induktivität ist eine Freilaufdiode gegen Masse geschaltet, zwischen dem Ausgangsanschluß und Masse liegt ein RC-Glied. Eine Steuerschaltung wird vom Verbindungspunkt der Induktivität und des Kondensators des RC-Gliedes mit Energie versorgt und steuert den als Zerhackerschalter eingesetzten pnp-Transistor an dessen Basisanschluß. Ein Anlaufschaltkreis umfaßt einen zwischen dem mit der Energiequelle verbundenen Eingang und dem Basisanschluß des als Zerhackerschalter dienenden Transistors eingefügten ersten Widerstand, einen zwischen diesem Basisanschluß und einem Drain-Anschluß eines Feldeffekttransistors eingefügten, zweiten Widerstand sowie den genannten Feldeffekttransistor, der mit seinem Gate-Anschluß an Masse und mit seinem Source-Anschluß an den Versorgungsspannungsanschluß der Steuerschaltung, d.h. an den Verbindungspunkt zwischen der Induktivität und dem RC-Glied, angeschlossen ist.

Beim Einschalten des Gleichspannungsumsetzers gemäß der französischen Patentanmeldung FR-2 584 545 ist der Feldeffekttransistor zunächst leitend, da am RC-Glied zunächst noch keine Spannung anliegt. Aus der Energiequelle kann dann über den erstgenannten, zwischen dem Emitteranschluß und dem Basisanschluß des pnp-Transistors angeschlossenen Widerstand ein Strom fließen, der einen Spannungsabfall zwischen diesen beiden Anschlüssen des Transistors hervorruft. Der pnp-Transistor wird dadurch leitend, so daß über die Induktivität ein Strom zur Aufladung des Kondensators des RC-Gliedes fließt. Ist die Spannung am Kondensator so weit angestiegen, daß die Steuerschaltung den pnp-Transistor ansteuern kann, wird der Feldeffekttransistor gesperrt. Zwar fließt dann über diesen und den unmittelbar mit ihm verbundenen Widerstand des Anlaufschaltkreises kein Strom mehr, jedoch bleibt der erstgenannte Widerstand des Anlaufschaltkreises zwischen dem Emitteranschluß und dem Basisanschluß des pnp-Transistors weiterhin mit diesem verbunden und zieht damit auch weiterhin einen Strom. Dieser Strom führt während des gesamten Betriebes des Gleichspannungswandlers zu unerwünschten Verlusten; außerdem bedarf es einer besonderen Aufmerksamkeit bei der Dimensionierung der Steuerschaltung, um zu verhindern, daß der genannte Strom die Funktion des Zerhackerschalters beeinträchtigt.

Die Erfindung hat die Aufgabe, eine Schaltungsanordnung der eingangs genannten Art derart einfach und kompakt auszubilden und dabei gleichzeitig die in ihr entstehenden Energieverluste derart weiter zu vermindern, daß sie wirtschaftlich für die Energieversorgung eines Kleingerätes aus einer Energiequelle mit begrenztem Energieinhalt einsetzbar ist. Insbesondere soll die Schaltungsanordnung für die Speisung eines kleinen Haushaltsgerätes aus einer Batterie oder einem wiederaufladbaren Akkumulator mit geringer Ausgangsspannung einsetzbar sein.

Die Aufgabe wird erfindungsgemäß gelöst durch die kennzeichnenden Merkmale des Hauptanspruchs.

Nach der Erfindung werden das Hauptschaltelement und das Anlaufschaltelement durch voneinander getrennte Steuerschaltungen gesteuert. Diese Steuerschaltungen können speziell auf die Ausgangsspannung der Energiequelle bzw. auf die Speisespannung ausgelegt und somit ihre Verluste gezielt vermindert werden. Außerdem entfällt die Diode, die beim Stand der Technik die Speisespannung von der Energiequelle fernhält. Da bei hoher Speisespannung diese Diode ein aufwendiges Bauteil darstellt, vereinfacht sich die erfindungsgemäße Schaltungsanordnung und wird auch preiswerter in der Herstellung. Eine weitere Vereinfachung wird dadurch erzielt, daß bei der Erfindung nur noch ein einfaches induktives Element benötigt wird und damit außer dem aufwendigen Transformator nach dem Stand der Technik auch ein Gleichrichter und ein Glättungskondensator für hohe Spannungen eingespart werden können.

Das Anlaufschaltelement, das gegenüber dem Hauptschaltelement auf einen Betrieb, d.h. auf eine Ansteuerung mit niedrigen Steuerspannungen ausgelegt ist und in der Anlaufphase der Schaltungsanordnung, insbesondere bei Inbetriebnahme, z.B. beim Einschalten der Energiequelle, zunächst mit geringer Leistung die Speisespannung aufbaut, aus der dann die Hauptsteuerschaltung versorgt wird, wird bei der vorliegenden Erfindung dadurch in ihrer Baugröße reduziert, daß die Schaltperioden für das Anlaufschaltelement kürzer sind als die Schaltperioden, mit denen die Hauptsteuerschaltung das Hauptschaltelement steuert. Vorzugsweise sind die Schaltperioden für das Anlaufschaltelement deutlich kürzer gewählt als die für das Hauptschaltelement. Dadurch werden die Ströme im Anlaufschaltelement derart reduziert, daß dieser platzsparend mit der Anlaufsteuerschaltung zusammengefügt werden kann, vorzugsweise innerhalb eines einzigen integrierten Schaltkreises. Dadurch werden Volumen und Montagekosten gespart.

Der vorgegebene Wert der Speisespannung, bei dem die Anlaufsteuerschaltung und das Anlaufschaltelement abgeschaltet werden, wird vorzugsweise so niedrig gewählt, wie eine einwandfreie Funktion der Hauptsteuerschaltung und damit des Hauptschaltelements eben noch möglich ist.

Vorzugsweise sind Anlauf- und Hauptschaltelement parallel geschaltet. Die Erzeugung der Speisespannung durch das Anlaufschaltelement einerseits und durch das Hauptschaltelement andererseits ist dann besonders effektiv.

In einer bevorzugten Ausführungsform der Erfindung ist das Hauptschaltelement mit einem MOS-Feldeffekttransistor und das Anlaufschaltelement mit einem bipolaren Transistor ausgebildet. Der MOS-Feldeffekttransistor weist besonders geringe Verluste auf, die den Wirkungsgrad der Schaltungsanordnung bei Betrieb mit dem Hauptschaltelement steigern. Dagegen ist der bipolare Transistor durch niedrigere Spannungen ansteuerbar, so daß ein einwandfreies Anlaufen der Schaltungsanordnung mit der Ausgangsspannung der Energiequelle gewährleistet ist. Die dabei kurzzeitig auftretenden, höheren Verluste des bipolaren Transistors gegenüber dem MOS-Feldeffekttransistor fallen nicht ins Gewicht.

Die erfindungsgemäße Schaltungsanordnung ist vorteilhaft dafür einsetzbar, daß die Last von einem elektronisch kommutierten Gleichstrommotor gebildet wird. Derartige Motoren arbeiten sehr verlustarm, so daß zusammen mit der erfindungsgemäßen Schaltungsanordnung eine gute Ausnutzung der Energie aus der Energiequelle erzielt wird.

Weitere vorteilhafte Ausgestaltungen der Erfindung ergeben sich aus den Unteransprüchen.

Einige Ausführungsbeispiele der erfindungsgemäßen Schaltungsanordnung sind in der Zeichnung dargestellt und werden im nachfolgenden näher beschrieben.

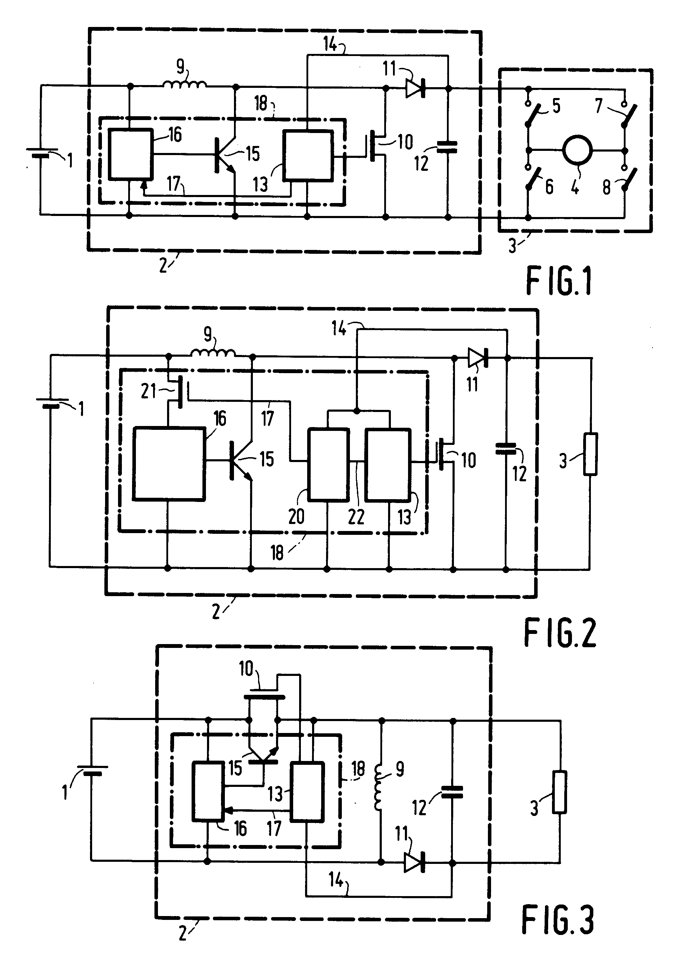

Fig. 1 zeigt ein Beispiel für eine erfindungsgemäße Schaltungsanordnung mit einer als Batterie dargestellten Energiequelle 1, die aber auch als netzgespeiste Gleichspannungsquelle oder als Akkumulator oder als Kombination davon ausgebildet sein kann. Die Energiequelle führt als Ausgangsspannung im wesentlichen eine niedrige Gleichspannung, der gegebenenfalls noch ein Rest-Wechselspannungsanteil überlagert sein kann. Aus der Energiequelle 1 wird über eine Gleichspannungsumsetzschaltung 2 eine Last 3 gespeist. Diese besteht, wie in Fig. 1 angedeutet, beispielsweise aus einem Gleichstrommotor 4, der zum Zweck der elektronischen Kommutierung in eine Vollbrücke aus vier Schaltelementen 5, 6, 7, 8 eingefügt ist. Die Schaltelemente 5, 6, 7, 8 sind der Einfachheit halber als mechanische Schalter dargestellt, werden jedoch in der Praxis als Halbleiterschaltelemente ausgeführt, beispielsweise als MOS-Feldeffekttransistoren. Die elektronische Kommutierung ist im Prinzip bekannt und soll hier nicht näher erläutert werden.

Die Gleichspannungsumsetzschaltung 2 enthält ein induktives Element 9, das bei der vorliegenden Erfindung als einfacher Zweipol, beispielsweise als Spule mit Ferritkern, ausgebildet ist. Das induktive Element 9 ist mit einem Hauptschaltelement 10 in Reihe geschaltet; diese Reihenschaltung ist an die Energiequelle 1 angeschlossen. Das Hauptschaltelement ist im vorliegenden Beispiel als MOS-Feldeffekttransistor ausgebildet, da dieser besonders verlustarm arbeitet. Grundsätzlich kann als Hauptschaltelement 10 auch ein entsprechendes anderes Bauteil Verwendung finden. Das Hauptschaltelement 10 ist durch die Reihenschaltung eines Gleichrichters 11 mit einem Glättungskondensator 12 überbrückt. Über dem Glättungskondensator 12 wird die Speisespannung zur Speisung der Last 3 abgegriffen.

Die Gleichspannungsumsetzschaltung 2 arbeitet in bekannter Weise dadurch, daß das Hauptschaltelement 10 periodisch zwischen dem leitenden und dem gesperrten Zustand hin und hergeschaltet wird und die dadurch von der Energiequelle 1 im induktiven Element 9 hervorgerufenen Stromstöße im Gleichrichter 11 gleichgerichtet, im Glättungskondensator 12 von Wechselspannungsanteilen befreit und dann der Last 3 zugeführt werden. Dazu wird das Hauptschaltelement 10 periodisch von einer Hauptsteuerschaltung 13 angesteuert, die der Steuerelektrode des Hauptschaltelementes 10, im vorliegenden Beispiel dem Gate-Anschluß des MOS-Feldeffekttransistors, eine entsprechende Steuerspannung zuleitet. Die Hauptsteuerschaltung 13 wird aus der am Glättungskondensator 12 anliegenden Speisespannung über eine Leitung 14 mit Energie versorgt, und die von der Energiequelle 1 gelieferte Gleichspannung ist so niedrig, daß aus ihr keine ausreichende Steuerspannung für das Hauptschaltelement 10 zu gewinnen ist.

Für die Anlaufphase der Schaltungsanordnung ist daher ein Anlaufschaltelement 15, beispielsweise ein bipolarer Transistor, vorgesehen, das ebenfalls mit dem induktiven Element 9 eine an die Energiequelle 1 angeschlossene Reihenschaltung bildet, aus der über den Gleichrichter 11 dem Glättungskondensator 12 Energie zuführbar ist. Dazu wird das Anlaufschaltelement 15 nach der Inbetriebnahme der Schaltungsanordnung von einer Anlaufsteuerschaltung 16 periodisch abwechselnd in den leitenden und in den gesperrten Zustand geschaltet. Die dabei über dem Anlaufschaltelement 15 im gesperrten Zustand auftretenden Spannungsimpulse treiben einen Strom durch den Gleichrichter 11, der den Glättungskondensator 12 auflädt. Im vorliegenden Beispiel ist das Anlaufschaltelement 15 vorteilhaft dem Hauptschaltelement 10 parallelgeschaltet.

Die Anlaufsteuerschaltung 16 umfaßt im wesentlichen einen Oszillator, der an das Anlaufschaltelement 15 über dessen Steuerelektrode, im vorliegenden Beispiel über den Basisanschluß des bipolaren Transistors, eine periodische Schaltspannung abgibt, deren Schaltperioden kürzer sind als die Schaltperioden, mit denen die Hauptsteuerschaltung 13 das Hauptschaltelement 10 steuert. Vorzugsweise sind die Schaltperioden für das Anlaufschaltelement 15 um ein Vielfaches kürzer als diejenigen für das Hauptschaltelement 10.

Die Anlaufsteuerschaltung 16 ist an die Energiequelle 1 angeschlossen und wird unmittelbar durch die von ihr gelieferte Gleichspannung gespeist. Im ersten Augenblick nach Inbetriebnahme der Schaltungsanordnung, d.h. zu Beginn der Anlaufphase, gibt nur die Anlaufsteuerschaltung 16 ihre Schaltspannung ab, während das Hauptschaltelement 10 noch im gesperrten Zustand verharrt. Über das Anlaufschaltelement 15 wird im Glättungskondensator 12 die Speisespannung aufgebaut. Wenn sie einen Wert erreicht, der für den Betrieb des Hauptschaltelements 10 ausreicht, beginnt die über die Leitung 14 mit der Energie aus dem Glättungskondensator 12 versorgte Hauptsteuerschaltung 13 das Hauptschaltelement 10 zu schalten. Dadurch wird dem Glättungskondensator weitere Energie zugeführt und er auf den Wert der Speisespannung aufgeladen, den diese für den Betrieb der Schaltungsanordnung annimmt. Wenn bei diesem Aufladevorgang die Speisespannung einen vorgegebenen Wert erreicht, wird von der Hauptsteuerschaltung 13 ein Abschaltsignal, beispielsweise in Form einer aus der Speisespannung vom Glättungskondensator 12 abgeleiteten Gleichspannung, abgegeben zum Abschalten der Anlaufsteuerschaltung 16, und zwar im vorliegenden Beispiel über eine Abschaltleitung 17. Das Abschaltsignal unterbricht die Erzeugung der periodischen Schaltspannung in der Anlaufsteuerschaltung 16 und schaltet das Anlaufschaltelement 15 in den gesperrten Zustand. Für den weiteren Betrieb der Schaltungsanordnung ist dann nur noch das Hauptschaltelement 10 mit der Hauptsteuerschaltung 13 wirksam, im Anlaufschaltelement 15 und in der Anlaufsteuerschaltung 16 fließen wenigstens nahezu keine Ströme mehr und treten dadurch keine Verluste mehr auf.

Die Hauptsteuerschaltung 13 kann in an sich bekannter Weise eine Regelung für den Wert der Speisespannung umfassen. Der zu regelnde Wert der Speisespannung wird dann ebenfalls über die Leitung 14 als Ist-Größe der Regelung zugeführt. Dabei wird der Regelbereich zu niedrigen Werten der Speisespannung hin derart begrenzt, daß die Funktion der Hauptsteuerschaltung 13 einwandfrei gewährleistet ist, d.h. auch, daß das Hauptschaltelement 10 einwandfrei gesteuert werden kann. Anderenfalls würde in diesem niedrigen Wertebereich der Speisespannung die Gleichspannungsumsetzschaltung 2 ausschließlich oder zu einem wesentlichen Teil über das Anlaufschaltelement 15 betrieben.

Durch die strichpunktierte Linie 18 sind in Fig. 1 die Schaltungsteile umfahren, die sich bei diesem Beispiel vorteilhaft in einem monolytisch integrierten Schaltkreis zusammenfassen lassen. Dabei benötigt der als Anlaufschaltelement 15 verwendete bipolare Transistor wenig Platz auf dem Halbleiterkristall, da er aufgrund der Ansteuerung mit sehr kurzen Schaltperioden nur sehr geringe Ströme führt. Der Oszillator in der Anlaufsteuerschaltung 16 kann sehr einfach und damit ebenfalls platzsparend ausgebildet sein, da weder die Amplitude noch die Schaltperiode der von ihm abgegebenen periodischen Schaltspannung besonderen Genauigkeitsanforderungen unterworfen ist.

Fig. 2 zeigt eine Abwandlung der Schaltungsanordnung nach Fig. 1, in der bereits beschriebene Elemente mit den in Fig. 1 benutzten Bezugszeichen versehen sind. Diese Schaltungsanordnung enthält einen Spannungsdetektor 20, von dem die Spannung am Glättungskondensator 12 detektiert und die Anlaufsteuerschaltung 16 bei Erreichen des vorgegebenen Wertes abgeschaltet wird. Dem Spannungsdetektor 20 wird dazu über die Leitung 14 die Speisespannung vom Glättungskondensator 12 zugeführt. Die Fig. 2 zeigt ferner ein vorteilhaftes Beispiel für eine Abschaltung der Anlaufsteuerschaltung 16. Diese wird dazu von der Energiequelle 1 über ein Abschaltelement 21 gespeist, das in den gesperrten Zustand geschaltet wird, wenn die Speisespannung den vorgegebenen Wert erreicht. Dazu wird das Abschaltsignal vom Spannungsdetektor 20 über die Abschaltleitung 17 dem Abschaltelement 21 zugeführt. Vorzugsweise ist das Abschaltelement 21 als Transistor, insbesondere als MOS-Feldeffekttransistor, ausgebildet, und die Abschaltleitung 17 ist mit dessen Steuerelektrode, beispielsweise dem Gate-Anschluß, verbunden.

Im Beispiel nach Fig. 2 ist vom Spannungsdetektor 20 weiterhin eine Schaltleitung 22 zur Hauptsteuerschaltung 13 geführt, über die diese in Verbindung mit dem Abschalten der Anlaufsteuerschaltung 16 in Betrieb gesetzt wird. Die Schaltleitung 22 kann dazu das Abschaltsignal oder ein entsprechend dazu erzeugtes Schaltsignal führen. Durch den Spannungsdetektor 20 wird somit wahlweise die Anlaufsteuerschaltung 16 oder die Hauptsteuerschaltung 13 in Betrieb gesetzt. Vorzugsweise wird die Hauptsteuerschaltung 13 durch das Schaltsignal bereits bei einem Wert der Speisespannung in Betrieb gesetzt, der um einen bestimmten Betrag kleiner ist als der vorgegebene Wert der Speisespannung, bei dem die Anlaufsteuerschaltung 16 abgeschaltet wird. Es tritt dann eine Überlappung der Bereiche der Speisespannung auf, in denen die Hauptsteuerschaltung 13 bzw. die Anlaufsteuerschaltung 16 arbeiten. Dadurch wird auch beim Auftreten von Fertigungstoleranzen in jedem Fall sichergestellt, daß die Schaltungsanordnung keinen Wertebereich der Speisespannung aufweist, in dem weder die Hauptsteuerschaltung 13 noch die Anlaufsteuerschaltung 16 in Betrieb sind, da die Gleichspannungsumsetzschaltung 2 in diesem Fall in der Anlaufphase verharren würde.

Wie durch die strichpunktierte Linie 18 in Fig. 2 angedeutet, werden bei dieser Schaltungsanordnung vorteilhaft zu den in Fig. 1 genannten Schaltungsteilen auch der Spannungsdetektor 20 und das Abschaltelement 21 auf einem Halbleiterkristall integriert.

In Abwandlung des beschriebenen Beispiels mit einem Abschaltelement 21 für eine einpolige Abschaltung der Anlaufsteuerschaltung 16 können auch zwei Abschaltelemente für eine zweipolige Abschaltung vorgesehen sein.

Fig. 3 zeigt ein Ausführungsbeispiel, das im wesentlichen demjenigen nach Fig. 1 entspricht, wobei lediglich die Anordnung des induktiven Elements 9 und des Hauptschaltelements 10 gegeneinander vertauscht wurden, so daß hier die Reihenschaltung aus dem Gleichrichter 11 und dem Glättungskondensator 12 parallel zum induktiven Element 9 anstelle des Hauptschaltelements 10 angeordnet ist. Dadurch ist auch das Anlaufschaltelement 15 in eine gegenüber Fig. 1 veränderte Anordnung gebracht, jedoch weiterhin parallel zum Hauptschaltelement 10 geschaltet. Durch die veränderte Anordnung ist ferner die Polarität der Speisespannung gegenüber Fig. 1 umgedreht. Für diese veränderte Polarität ist insbesondere die Hauptsteuerschaltung 13 angepaßt.

## Patentansprüche

1. Schaltungsanordnung zur Speisung einer Last (3) aus einer Energiequelle (1) mit niedriger Ausgansspannung über eine Gleichspannungsumsetzschaltung (2), die durch ein Hauptschaltelement (10) periodisch Energie aus der Energiequelle (1) entnimmt und über ein induktives Element (9) und einen Gleichrichter (11) der Last (3) mit einer erhöhten Speisespannung (an 12) zuführt, und die ein Anlaufschaltelement (15), durch das der Energiequelle (1) in einer Anlaufphase der Schaltungsanordnung Energie zum Erzeugen der Speisespannung (an 12) entnommen wird, sowie eine Hauptsteuerschaltung (13), die unmittelbar aus der Speisespannung (an 12) mit Energie versorgt und von der das Hauptschaltelement (10) periodisch gesteuert wird, aufweist,
**gekennzeichnet durch** eine Anlaufsteuerschaltung (16), die unmittelbar und ausschließlich von der Energiequelle (1) gespeist und von der das Anlaufschaltelement (15) periodisch gesteuert wird, wobei die Schaltperioden für das Anlaufschaltelement (15) kürzer sind als die für das Hauptschaltelement (10) und die Anlaufsteuerschaltung (16) und damit das Anlaufschaltelement (15) abgeschaltet werden, wenn die Speisespannung (an 12) einen vorgegebenen Wert erreicht.

2. Schaltungsanordnung nach Anspruch 1,
**dadurch gekennzeichnet**, daß Anlauf-(15) und Hauptschaltelement (10) parallel geschaltet sind.

3. Schaltungsanordnung nach Anspruch 1 oder 2,
dadurch gekennzeichnet, daß das Hauptschaltelement (10) mit einem MOS-Feldeffekttransistor und das Anlaufschaltelement (15) mit einem bipolaren Transistor ausgebildet ist.

4. Schaltungsanordnung nach Anspruch 1, 2 oder 3,
dadurch gekennzeichnet, daß die Last (3) von einem elektronisch kommutierten Gleichstrommotor gebildet wird.

5. Schaltungsanordnung nach Anspruch 1, 2, 3 oder 4,
gekennzeichnet durch einen Spannungsdetektor (20), von dem die Speisespannung (an 12) detektiert und die Anlaufsteuerschaltung (16) bei Erreichen des vorgegebenen Wertes abgeschaltet wird.

6. Schaltungsanordnung nach Anspruch 1, 2, 3 oder 4,
dadurch gekennzeichnet, daß von der Hauptsteuerschaltung (13) ein Abschaltsignal (auf 17) abgegeben wird zum Abschalten der Anlaufsteuerschaltung (16), wenn die Speisespannung (an 12) den vorgegebenen Wert erreicht.

## Claims

1. A circuit arrangement for powering a load (3) from a low-output-voltage power source (1) *via* a d.c. converter circuit (2), which periodically withdraws power from the power source (1) by means of a main switch element (10) and powers the load (3) with an increased supply voltage (across 12) *via* an inductive element (9) and a rectifier (11), and which comprises a starting switch element (15) by means of which power for the generation of the supply voltage (across 12) is withdrawn from the power source (1) in a starting phase of the circuit arrangement, and a main control circuit (13), which is powered directly by the supply voltage (across 12) and by which the main switch element (10) is actuated periodically,
**characterized by** a starting control circuit (16) which is powered directly and exclusively by the power source (1) and which periodically actuates the starting switch element (15), the switching periods for the starting switch element (15) being shorter than those for the main switch element (10), and the starting control circuit (16), and hence the starting switch element (15), being deactivated when the supply voltage (across 12) reaches a predetermined value.

2. A circuit arrangement as claimed in Claim 1, **characterized in that** the starting switch element (15) and the main switch element (10) are connected in parallel.

3. A circuit arrangement as claimed in Claim 1 or 2, **characterized in that** the main switch element (10) comprises a MOS field-effect transistor and the starting switch element (15) comprises a bipolar transistor.

4. A circuit arrangement as claimed in Claim 1, 2 or 3, **characterized in that** the load (3) is formed by an electronically commutated d.c. motor.

5. A circuit arrangement as claimed in Claim 1, 2, 3 or 4, **characterized by** a voltage detector (20) which detects the supply voltage (across 12) and which deactivates the starting control circuit (16) when the predetermined value is reached.

6. A circuit arrangement as claimed in Claim 1, 2, 3 or 4, **characterized in that** the main control circuit (13) supplies a deactivation signal (to 17) to deactivate the starting control circuit (16) when the supply voltage (across 12) reaches the predetermined value.

## Revendications

1. Circuit pour alimenter une charge (3) à partir d'une source d'énergie (1) à basse tension de sortie à travers un circuit convertisseur de tension continue (2) qui, à travers un élément de commutation principale (10), prélève périodiquement de l'énergie sur la source d'énergie (1) pour l'appliquer, à travers un élément inductif (9) et un redresseur (11), à la charge (3) à une tension d'alimentation accrue (sur 12), et qui présente un élément de commutation de démarrage (15) qui prélève sur la source d'énergie (1), dans une phase de démarrage du circuit, de l'énergie pour engendrer la tension d'alimentation (sur 12), ainsi qu'un circuit de commande principale (13) alimenté en énergie directement à partir de la tension d'alimentation (sur 12) et commandé périodiquement par l'élément de commutation principale (10), caractérisé par un circuit de commande de démarrage (16) alimenté directement et exclusivement à partir de la source d'énergie (1) et par lequel est commandé périodiquement l'élément de commutation de démarrage (15), les périodes de commutation pour l'élément de commutation de démarrage (15) étant d'une durée plus courte que pour l'élément de commutation principale (10) et le circuit de commande de démarrage (16) et, par conséquent, l'élément de commutation de démarrage (15) étant débranchés lorsque la tension d'alimentation (sur 12) atteint une valeur prédéterminée.

2. Circuit selon la revendication 1, caractérisé en ce que les éléments de commutation de démarrage (15) et de commutation principale (10) sont disposés en parallèle.

3. Circuit selon la revendication 1 ou 2, caractérisé en ce que l'élément de commutation principale (10) et l'élément de commutation de démarrage (15) sont respectivement formés d'un transistor à effet de champ MOS et d'un transistor bipolaire.

4. Circuit selon la revendication 1, 2 ou 3, caractérisé en ce que la charge (3) est constituée par un moteur à courant continu à commutation électronique.

5. Circuit selon la revendication 1, 2, 3 ou 4, caractérisé par un détecteur de tension (20) qui détecte la tension d'alimentation (sur 12) et qui débranche le circuit de commande de démarrage (16) lorsque la valeur prédéterminée est atteinte.

6. Circuit selon la revendication 1, 2, 3, ou 4, caractérisé en ce que le circuit de commande principale (13) délivre un signal de débranchement (sur 17) pour débrancher le circuit de commande de démarrage (16) lorsque la tension d'alimentation (sur 12) atteint la valeur prédéterminée.
